# EUROPEAN PATENT SPECIFICATION

(11) **EP 2 776 240 B1**
(45) Date of publication and mention of the grant of the patent: **14.12.2016**
(21) Application number: 12715735.2
(22) Date of filing: 07.02.2012
(51) Int. Cl.: B32B 38/10, B32B 38/00, B32B 3/14, B32B 3/16, B32B 21/04, B32B 21/10, B32B 7/12

(54) **MULTILAYER FLEXIBLE ELEMENT MADE OF WOOD AND RELATED PRODUCTION PROCESS BY LASER ENGRAVING AND/OR CUTTING**
MEHRSCHICHTIGES FLEXIBLES ELEMENT AUS HOLZ UND VERFAHREN ZU SEINER HERSTELLUNG MITTELS LASERGRAVUR UND/ODER -SCHNEIDUNG
ÉLÉMENT FLEXIBLE MULTICOUCHE CONSTITUÉ DE BOIS ET PROCÉDÉ DE PRODUCTION CONNEXE PAR GRAVURE ET/OU DÉCOUPAGE AU LASER

(30) Priority: 09.11.2011 IT RM20110592
(43) Date of publication of application: 17.09.2014
(73) Proprietor: Mymantra S.r.l., 00166 Roma (IT)
(72) Inventor: ANTONELLI, Marcello, I-00163 Rome (IT); ANTONELLI, Marta, I-00163 Rome (IT)
(74) Representative: Zizzari, Massimo
(86) International application number: PCT/IT2012/000042
(87) International publication number: WO 2013/069035

(56) References cited:
- EP-A1- 1 074 194
- EP-A1- 1 479 849
- WO-A1-01/15892
- WO-A1-2006/090287
- WO-A1-2008/078003
- AU-B2- 200 053 363
- CA-A1- 2 245 337
- DE-U1-202006 003 382
- US-A1- 2008 113 143

## Description

The present invention relates a multilayer flexible element made of wood, and related production process by laser engraving and/or cutting. More exactly, the production process consists in the processing of materials, in which a material made of wood previously rigid after the processing acquires characteristics and properties typical of a tissue, in such a way to be suitable as raw material, preferably in clothing, furnishing and design. The production process is based on the use of a laser device able to realize a pattern of grooves on the top layer of a multilayer material that, after the processing, can be used in the same way of a flexible material.

In the state of the art procedures have already been developed to make products made of wood or other rigid material appropriately worked to create a flexible structure that can adapt to various shapes and profiles, so that the above-mentioned products can be used as clothing accessories or furnishing.

AU 200053363 B2 discloses a process for producing a flexible material comprising a layer of shell material which has been cut by a laser.

EP 1 479 849 A1 discloses a flexible multilayer floor material comprising a layer a wood having slots made in the length and the width by using machinery.

In some cases, these structures are real clothes. The technique used up to now consists in realizing a basic structure articulated, for example a metallic structure with some pins that allow the rotation of a part on the other, within this metallic structure are inserted wooden dowels to form a mosaic. The procedure provides for the cut of the single dowels, and the subsequent manual installation, one at a time, up to form the final product. This processing determines a problem of precision, for the fact that intervenes an operator to realize the product, and there is also a problem of timing, because the processing must follow a manual operation. There is also a problem of costs because to realize a single product you employ a certain quantity of raw material, a certain time to design the product and manufacture it manually, and also you need labor which must intervene directly.

All the above disadvantages are overcome by the present invention which has as main objective to make usable the same way of a tissue or other flexible material, those materials made of wood which by their nature and characteristics have a rigid structure and limited modeling.

A further objective is that such materials made of wood adequately processed, can be used in the applications already in use both for tissues that for the leather.

Another objective is to use these materials made of wood in order to enrich the range of materials already usable in clothing and design, particularly in textiles and tanneries.

A further objective is that the mode of processing ensures high speed and precision. Another objective is that this processing technique is extremely versatile in such a way you can operate in different sectors, from clothing to furnishings, up to the automotive industry.

A further objective is that this processing is without direct contact with the material, so as to provide the maximum safety for the operator.

Another objective is that the laser engraving and/or cutting should be permanent, unalterable and unchangeable.

Therefore, it is specific subject of the present invention a multilayer flexible element made of wood, and related production process by laser engraving and/or cutting, preferably applied in fashion, furniture and design industries.

The invention is defined by the appended claims.

The multilayer flexible element is composed of:
- a layer of rigid material, supplied in sheets or plates, made of wood;
- a layer of flexible support material, in example a tissue, onto which is connected said layer of rigid material;
- means of connection of said layer of rigid material to said layer of flexible support material, in example by glue, characterized by high elasticity and resistance to temperature changes;
- a texture in vector graphics which will define the cutting of the workpiece material, his flexibility and the consequent modeling and softness;
wherein said process comprises the following steps:
- connection of said layer of rigid material to said layer of flexible support material, in example by glue;
- design of said texture in vector graphics, and download into a control system of an industrial device suitable to generate and focus a high power laser beam;
- engraving and/or cutting of said layer of rigid material, guided by the above-mentioned texture, by fusion and high temperature evaporation caused by a laser beam;
in order to make flexible rigid materials made of wood, and suitable as decorative and/or functional elements for covering in fashion, furniture and design industries.

The present invention will now be described for illustrative but not limitative, with particular reference to the figures of the accompanying drawings, in which:
- figure 1 is a perspective view of the rigid material and of the flexible support, provided in elements already cut that will go subsequently glued between them;
- figure 2 is a perspective view of the gluing phase of the above mentioned materials means a layer of glue or adhesive;
- figure 3 is a front view of a texture that defines the cutting of the rigid material;
- figure 4 is a perspective view of a laser device, which provides the processing of the multilayer material;
- figure 5 is a perspective view of a first example of flexible material, which is the final result of such procedure of processing;
- figure 6 is a perspective view of a second example of flexible material, which is the final result of such procedure of processing;
- figure 7 is a perspective view of a third example of flexible material, which is the final result of such procedure of processing;
- figure 8 is a functional block diagram of the various phases of the procedure for the realization of the new material.

Below will be described for illustrative but not limitative purposes only one of the possible embodiments of the present invention being possible to describe other embodiments on the basis of the particular technical solutions identified. In the various figures the same elements will be indicated with the same identification numbers.

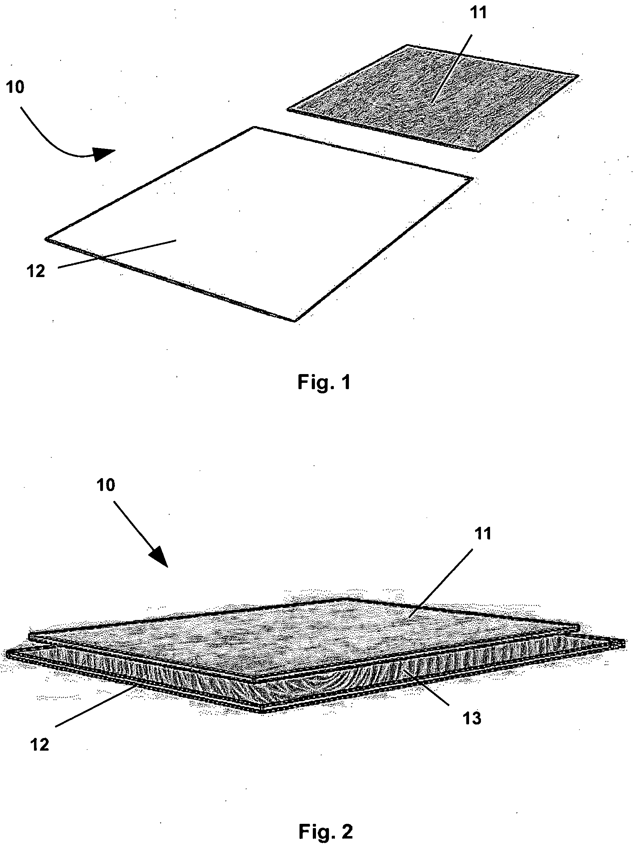

The first thing to occupy to make this manufacturing process is the retrieval of materials, that are illustrated in figure 1. The rigid material 11 will have to be necessarily procured in sheets or plates already cut; the thickness of each sheet may vary from 1/10 mm to 10 mm, depending of its intended use and of the flexible support 12 to which must be appropriately glued. The size of the rigid material 11 should also be capable of being accommodated in a laser engraving and cutting machine. The flexible support 12 can be made of tissue, on net support, e.g. glass fiber or fiber of flax, which guarantee high softness and flexibility, the flexible support 12 will have to be the same size of the rigid material 11 to which subsequently will be glued and must have a uniform surface in such a way to allow an adequate gluing. In particular, in figure 1 is illustrated the rigid wood material 11 which through the manufacturing would be made usable as a tissue.

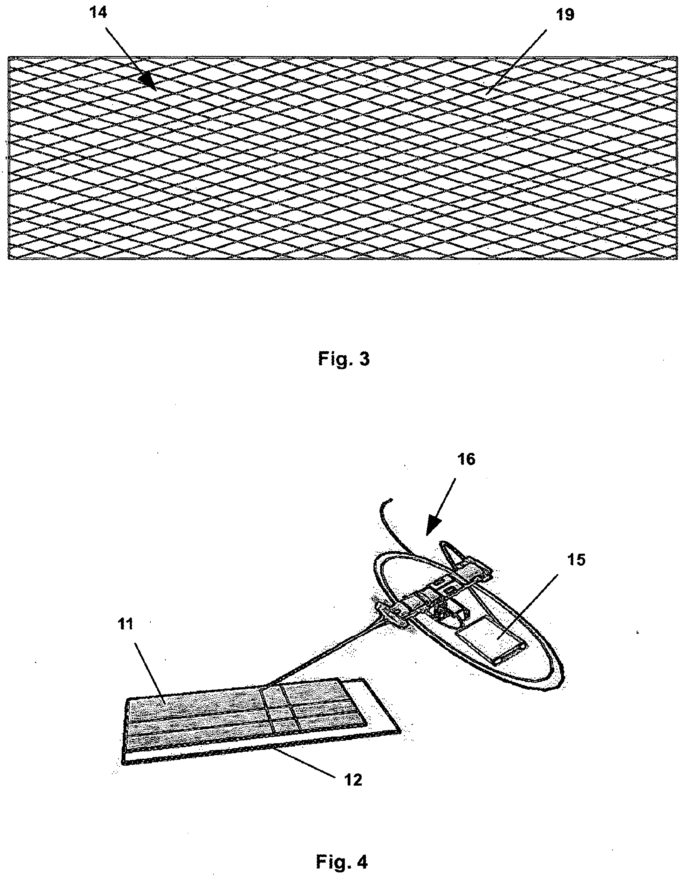

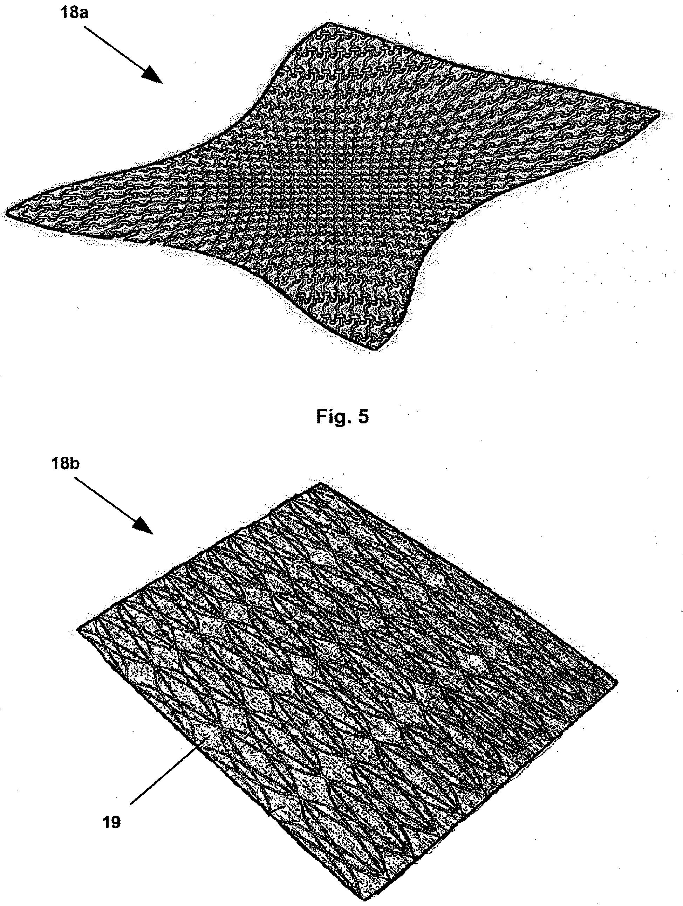

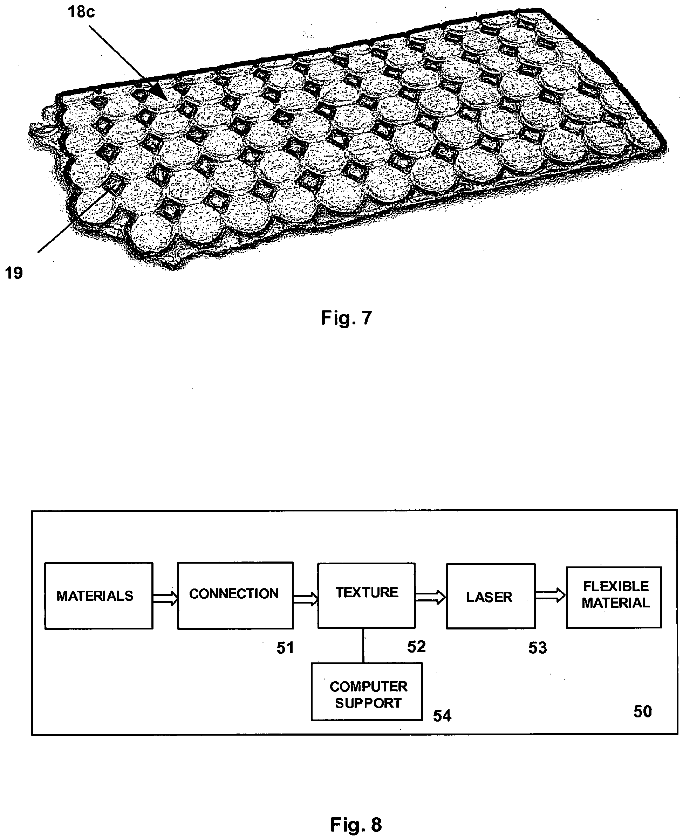

Wood has very good properties such as lightness, insulating (acoustic and electromagnetic), it is an ecological material, biocompatible (natural raw material, renewable, recyclable and it can be obtained with low energy cost) and it is also aesthetically pleasing. These properties make this material widely used in various sectors. Once you have retrieved the materials, you pass to the phase of final gluing of rigid material 11 with the flexible support 12, in such a way to form a multilayer element 10, as is illustrated in figure 2. For the bonding is preferable to use an adhesive 13 that maintains adequate elasticity, water resistance and temperature changes resistance after drying and that is able to merge the two layers of material definitively. Depending on the materials to be processed you can use vinyl glue, hot glue, contact adhesives, or adhesives sealants. After that you will provide to the realization of a texture 14 in vector graphics (e.g. that illustrated in figure 3), which will be reproduced on the layer of rigid material 11 through the laser device 16 which will provide to engrave and/or cut the said layer, as illustrated in figure 4. In particular the laser cuts the materials through vaporization, merger or through combustion and every material reacts in a different way, because of differences of hardness, chemical composition, surface finish, reflective capacity and obviously thickness. The engraving process refers to the possibility of marking the surface with a micro fusion, a combustion or a removal of material. The difference depends on the chemical composition and on the reaction to the heat of the various materials. The above mentioned texture 14, generated to the computer with graphics programs or through specific software, can be stored in a data storage device 15, the texture 14 will guide the laser device 16 during the engraving and/or the cutting of the single layer of rigid material 11, previously glued on the flexible support 12; this assumes that the laser device 16 must be calibrated so that power, velocity and degree of definition affect only the thickness of the rigid material 11, leaving unchanged the layer of adhesive 13 and the underlying flexible support 12. The fact that the texture 14 is into vector graphics allows to express the data in a format that takes up less space than the equivalent raster; and also guarantees the possibility of enlargement, without encountering a loss of resolution, such is a fundamental requirement to obtain maximum precision during the processing. The type of texture 14 (its structure, size, spacing between lines, etc..) will define the degree of armor and the consequent modeling and softness of the treated material, as well as direction of the fiber and the direction of the fold. The texture 14 will give essentially the ornamental aspect of the engraved surface, defining the degree of flexibility and softness of the multilayer material 10. The pieces 19 of the texture 14 can, depending on the requirement and the effect that you'll want to produce, have size ranging from 1 mm² up to 10 mm² or eventually even more. With reference to figure 5, the new material 18a, as a result of reproduction by the laser of the texture 14 on the multilayer material 10, in particular on the layer of rigid material 11, will not be rigid but fractionated in hundreds/thousands of pieces 19 as defined in the succession of lines that make up the texture 14. In figure 6 is illustrated a further type of new material 18b obtainable through the same technique of processing. In figure 7 is illustrated a variant of the new material 18c in which it is expected the possibility of eliminating some pieces 19 of the texture 14 according to which is divided the layer of rigid material 11, in such a way as to increase the flexibility and allow the folding of the above mentioned new material 18c in more directions; it becomes therefore fundamental the choice of the type of texture 14 to be reproduced on the layer of rigid material 11, the texture 14 defines not only the appearance purely aesthetic of the new material 18a-18b-18c but also its functionality and consequently its possible applications. The new material 18a-18b-18c, obtained by the above mentioned manufacturing through laser engraving and/or cutting of the multilayer material 10, according to a pattern of grooves defined by the texture 14, will be called for convenience "soft material" and may find application in the compartments of clothing, furniture and design. Figure 8 shows schematically the steps in blocks of the entire manufacturing process 50 through laser device able to realize new materials: the laser device 53 through engraving and/or cutting reproduces on the top layer of the multilayer material 10 the texture 52, stored in a data storage device 54, thus creating a new material 18a-18b-18c not more rigid, called for convenience soft material. Once the new material 18a-18b-18c is ready for use, it may be subject to further process of gluing and/or sewing in such a way to be suitable in tailoring to create clothes, tents, accessories, etc. Otherwise the new material 18a-18b-18c can be treated with hardeners resins, in such a way to make it rigid and applicable for example in furniture or vehicle industries.

The above examples demonstrate, therefore, that the present invention achieves all the goals proposed. In particular it allows to make usable the same way of a tissue or other flexible material, those materials made of wood which by their nature and characteristics have a rigid structure and limited modeling.

Furthermore such materials, adequately processed, can be used in the applications already in use both for tissues that for the leather.

In addition you can use these materials made of wood in order to enrich the range of materials already usable in clothing and design, particularly in textiles and tanneries.

Furthermore the mode of processing ensures high speed and precision.

In addition this processing technique is extremely versatile in such a way you can operate in different sectors, from clothing to furnishing, up to the automotive industry. Furthermore this processing is without direct contact with the material, so as to provide the maximum safety for the operator.

In addition the laser engraving and/or cutting should be permanent, unalterable and unchangeable.

The present invention has been described by way of illustration but not limitation, according to a preferred embodiment, it is intended that any changes and/or modifications may be made by experts without leaving out of the scope of protection, as defined by the appended claims.

## Claims

1. Process (50) able to produce a multilayer flexible element (10) by laser engraving and/or cutting, said multilayer flexible element (10) being composed of: a layer of rigid material (11) made of wood, having a structure of slots on its surface; a layer of flexible support material (12), in example a tissue, onto which said layer of rigid material (11) is connected; means of connection (13) of said layer of rigid material (11) to said layer of flexible support material (12), in example by glue, said process (50) being **characterized by** the following steps:
- connection (51) by overlaying said layer of rigid material (11) on said layer of flexible support material (12), in example by glue;
- design (52) of a *texture* in vector graphics (14) defining a structure of lines, and download it into a control system of an industrial device able to generate and focus a high power laser beam, called *laser device*;
- engraving (53) and/or cutting of said layer of rigid material (11), according to the above-mentioned *texture* (14), by fusion and high temperature evaporation caused by a laser beam, in order to create said structure of slots on said layer of rigid material (11),
so that said multilayer flexible element (10) represents a new material (18a), (18b), (18c) being flexible so that it can be used as a decorative and/or functional element for covering in fashion, furniture and design industries, and
- said new material (18a), (18b), (18c), is submitted to a further step of gluing and/or sewing in parts of tissue, in such a way to be suitable in tailoring to create clothes, tents, accessories, etc.

2. Process (50) able to produce said multilayer flexible element (10) according to previous claim 1, said process (50) being **characterized by** the following additional step:
- the above-mentioned new material (18a), (18b), (18c), is treated with hardeners resins fixing its shapes,
in such a way to make it rigid and applicable for example in furniture or vehicle industries.

3. Multilayer flexible element (10), preferably applied in fashion, furniture and design industries, composed of: a layer of rigid material (11) made of wood, having a structure of slots on its surface; a layer of flexible support material (12), in example a tissue, onto which said layer of rigid material (11) is connected; means of connection (13) of said layer of rigid material (11) to said layer of flexible support material (12), in example by glue; said multilayer flexible element (10) **characterized in that** being obtained by a process (50) according to claim 1.

4. Multilayer flexible element (10), according to previous claim 3, **characterized in that**:
- the thickness of each sheet or plate of the above-mentioned layer of rigid material (11) is between 1/10 mm and 10 mm, according to its intended use and the layer of flexible support (12) which is properly glued;
- the flexible support (12) has the same size of the rigid material (11) which will be glued;
- the flexible support (12) has a uniform surface, in such a way to allow adequate gluing.

5. Multilayer flexible element (10), according to one or more of previous claims 3 or
4, **characterized in that**:
- said glue (13), to be used to connect said layer of rigid material (11) to said flexible support material (12), has chemical-physical characteristics suitable to maintain high elasticity, water resistance and temperature changes resistance after drying, in such a way to glue the two sheets of material definitely.

6. Multilayer flexible element (10), according to one or more of previous claims from 3 to 5, **characterized in that**:
- sais *texture* (14), generated by a computer with programs for graphics, or using a specific *software*, can be stored in a data storage device (15), and represents the input of means guiding a laser device (16) during the engraving and/or the cutting of the single layer of rigid material (11), previously glued on the flexible support (12),
so that said new material (18a), (18b), (18c), obtained by the above-mentioned process (50) through laser engraving and/or cutting, will have no longer a rigid structure but will have its upper part divided in multiple pieces (19) as defined in the structure of lines that make up the *texture* (14).

7. Multilayer flexible element (10), according to one or more of previous claims from 3 to 6, **characterized in that**:
- the laser device (16) is calibrated so that power, velocity and degree of definition affect only the thickness of the rigid material (11), leaving unchanged the layer of adhesive (13) and the underlying flexible support (12).

8. Multilayer flexible element (10), according to one or more of previous claims from 3 to 7, **characterized in that**:
- said pieces (19) of the *texture* (14) have size ranging from 1 mm² up to 10 mm², or eventually even more, according to application and visual effect that is required to be produced.

9. Multilayer flexible element (10), according to one or more of previous claims from 3 to 8, **characterized in that**:
- the above-mentioned pieces (19) of the *texture* (14) can be removed from said layer of rigid material (11),
in such a way to increase flexibility and allow the folding of this new material (18a), (18b), (18c), in many directions and consequently increase its possible applications.

## Patentansprüche

1. Verfahren (50) zur Herstellung eines mehrschichtigen flexiblen Elements (10) durch Ätzen und/oder Schnitt mittels Laser, besagtes mehrschichtiges flexibles Element (10) ist wie folgt zusammengesetzt: eine Schicht steifes Material (11) bestehend aus Holz und mit einer Struktur aus Ätzung auf der Oberfläche; eine Schicht flexibles Trägermaterial (12), zum Beispiel ein Gewebe, mit welchem die zuvor genannte Schicht aus steifem Material (11) verbunden ist; Verbindungsmittel (13) der zuvor genannten steifen Schicht (11) an die zuvor genannte Schicht aus flexiblem Trägermaterial (12), zum Beispiel mittels Kleber, besagtes Verfahren (50) zeichnet sich durch die folgenden Schritte aus:
- Verbindung (51) für die Überlagerung der zuvor genannten Schicht aus steifem Material (11) mit der zuvor genannten Schicht aus flexiblem Trägermaterial (12), zum Beispiel mittels Kleber;
- Definition (52) einer Textur aus Vektorgrafik (14), die eine Linienstruktur definiert und ihre Einführung in ein Kontrollsystem einer industriellen Vorrichtung, genannt Lasergerät, das in der Lage ist, einen Laserstrahl mit hoher Leistung zu erzeugen und zu bündeln;
- Ätzung (53) und/oder Schnitt der zuvor genannten Schicht aus steifem Material (11) gemäß der zuvor genannten Textur (14), mittels Fusion und Verdunstung bei hoher Temperatur, die vom zuvor genannten Laserstrahl bestimmt wird, um so die zuvor genannte Struktur aus Ätzungen auf der zuvor genannten Schicht aus steifem Material zu schaffen (11),
so, dass besagtes mehrschichtiges flexibles Element (10) ein neues Material (18a), (18b), (18c) darstellt, das flexibel ist, damit es als ein ornamentales und/oder funktionales Beschichtungselement in der Bekleidungs-, Möbel- und Designindustrie verwendet werden kann, und
- besagtes neues Material (18a), (18b), (18c) wird einem weiteren Schritt der Verklebung und/oder Naht in Teilen des Gewebes unterzogen, so dass es im Sektor der Schneiderei verwendbar ist, um Kleider, Gardinen, Accessoires, usw. zu schaffen.

2. Verfahren (50) zur Herstellung eines mehrschichtigen flexiblen Elements (10) gemäß dem vorherigen Anspruch 1, besagtes Verfahren (50) zeichnet sich durch den folgenden weiteren Schritt aus:
- das zuvor genannte neue Material (18a), (18b), (18c) wird mit einem härtenden Harz behandelt, das die Formen fixieren,
um es so zum Beispiel für die Möbelindustrie oder Industrie für Fahrzeuge steif und anwendbar zu machen.

3. Flexibles mehrschichtiges Element (10), vorzugsweise in der Bekleidungs-, Möbel- und Designindustrie angewandt, bestehend aus: einer Schicht aus steifem Material (11) bestehend aus Holz und mit einer Struktur aus Ätzung auf der Oberfläche; einer Schicht flexiblem Trägermaterial (12), zum Beispiel ein Gewebe, mit welchem die zuvor genannte Schicht aus steifem Material (11) verbunden ist; Verbindungsmittel (13) der zuvor genannten steifen Schicht (11) an die zuvor genannte Schicht aus flexiblem Trägermaterial (12), zum Beispiel mittels Kleber, besagtes flexibles mehrschichtiges Element (10) zeichnet sich durch die Tatsache aus, dass es durch ein Verfahren (50) gemäß dem vorherigen Anspruch 1 erhalten wird.

4. Flexibles mehrschichtiges Element (10) gemäß dem vorherigen Anspruch 3, das sich durch die Tatsache auszeichnet, dass:
- die Stärke jedes Blatts oder Platte des zuvor genannten steifen Materials (11) im Bereich zwischen 1/10 mm und 10 mm, je nach Verwendung, für die es bestimmt ist und der Eigenschaften des flexiblen Trägers (12), an welchen es sachgerecht geklebt wird, liegt;
- der flexible Träger (12) dieselben Abmessungen des steifen Materials (11), an welches er anschließend geklebt wird, hat;
- der flexible Träger (12) eine homogene Oberfläche hat, so dass eine sachgerechte Verklebung möglich ist.

5. Flexibles mehrschichtiges Element (10) gemäß einem oder mehrerer der vorherigen Ansprüche 3 oder 4, das sich durch die Tatsache auszeichnet, dass:
- der zuvor genannte Kleber (13), der für die Verbindung der besagten Schicht aus steifem Material (11) an besagte Schicht aus flexiblem Material (12) zu verwenden ist, über chemischphysikalische Eigenschaften verfügt, aufgrund derer er auch nach der Trocknung eine ausreichende Elastizität, Wasserbeständigkeit und Beständigkeit gegen Temperaturschwankungen beibehält, so dass die beiden Schichten endgültig miteinander verbunden werden.

6. Flexibles mehrschichtiges Element (10) gemäß einem oder mehrerer der vorherigen Ansprüche 3 bis 5, das sich durch die Tatsache auszeichnet, dass:
- besagte Textur (14), erzeugt mittels einem Computer mit Grafikprogrammen oder mittels spezifischen Softwares, und die ihrerseits auf einem Datenträger (15) gespeichert werden kann, ein Führungselement eines Lasergeräts (16) während der Ätzung und/oder des Schnitts nur der Schicht aus steifem Material (11), das zuvor auf den flexiblen Träger (12) geklebt wurde, bildet,
so, dass das neue Material (18a), (18b), (18c), das aus der zuvor genannten Bearbeitung durch Ätzung und/oder Schnitt erhalten wurde, keine steife Struktur mehr hat, sondern auf dem oberen Teil in vielfache Teile (19) geteilt ist, wie in der Linienstruktur, die die Textur (14) bildet, festgelegt.

7. Flexibles mehrschichtiges Element (10) gemäß einem oder mehrerer der vorherigen Ansprüche 3 bis 6, das sich durch die Tatsache auszeichnet, dass:
- die zuvor genannte Laservorrichtung (16) kalibriert wurde, damit die Leistung, die Geschwindigkeit und der Definitionsgrad ausschließlich auf die Stärke des steifen Materials (11) einwirken kann und die Kleberschicht (13) und den unterliegenden flexiblen Träger unverändert lässt.

8. Flexibles mehrschichtiges Element (10) gemäß einem oder mehrerer der vorherigen Ansprüche 3 bis 7, das sich durch die Tatsache auszeichnet, dass:
- die Teile (19), die die Textur (14) bilden, eine Abmessung von 1 mm² bis zu 10 mm² oder mehr, je nach Erfordernis oder Effekt, den man erzielen möchte, haben.

9. Flexibles mehrschichtiges Element (10) gemäß einem oder mehrerer der vorherigen Ansprüche 3 bis 8, das sich durch die Tatsache auszeichnet, dass:
- die zuvor genannten Teile (19) von der Schicht aus steifem Material (11) entfernt werden können,
um so die Flexibilität zu erhöhen und die Biegung des zuvor genannten neuen Materials (18a), (18b), (18c) in mehrere Richtungen ermöglichen zu können und folglich die möglichen Anwendung zu erhöhen.

## Revendications

1. Procédé (50) de production d'un élément multicouche flexible (10) par incision et/ou découpe par laser, ledit élément multicouche flexible (10) étant composé de : une couche de matériau rigide (11) composé de bois et ayant une structure d'incisions sur sa surface ; une couche de substrat flexible (12), par exemple un tissu, sur laquelle est connectée ladite couche de matériau rigide (11) ; moyens de connexion (13) de ladite couche de matériau rigide (11) à ladite couche de substrat flexible (12), par exemple avec de la colle, ledit procédé (50) étant **caractérisé par** les étapes suivantes :
- connexion (51) par superposition de ladite couche de matériau rigide (11) à ladite couche de substrat flexible (12), par exemple avec de la colle ;
- définition (52) d'une texture en graphisme vectoriel (14) qui définit une structure de lignes, et son introduction dans un système de contrôle d'un dispositif industriel, dénommé dispositif laser, en mesure de générer et focaliser un faisceau laser haute puissance ;
- incision (53) et/ou découpe de ladite couche de matériau rigide (11) selon ladite texture (14), par fusion et évaporation à température élevée déterminée par ledit faisceau laser, de manière à créer ladite structure d'incisions sur ladite couche matériau rigide (11),
de sorte que ledit élément multicouche flexible (10) représente un nouveau matériau (18a), (18b), (18c), étant flexible pour pouvoir être utilisé comme un élément décoratif et/ou fonctionnel de revêtement dans l'industrie de l'habillement, du mobilier et du design, et
- ledit nouveau matériau (18a), (18b), (18c), est soumis à une étape supplémentaire de collage et/ou couture dans des pièces de tissu, de manière à être utilisable dans le secteur de la couture pour créer des vêtements, des rideaux, des accessoires, etc.

2. Procédé (50) de production d'un élément multicouche flexible (10) selon la revendication 1 qui précède, ledit procédé (50) étant **caractérisé par** l'étape supplémentaire suivante :
- ledit nouveau matériau (18a), (18b), (18c), est traité avec des résines durcisseuses qui fixent ses formes,
de manière à le rendre rigide et applicable, par exemple, à l'industrie du mobilier ou des véhicules.

3. Élément multicouche flexible (10) de préférence appliqué à l'industrie de l'habillement, du mobilier et du design, composé de : une couche de matériau rigide (11) composé de bois et ayant une structure d'incisions sur sa surface ; une couche de substrat flexible (12), par exemple un tissu, sur lequel est connecté ladite couche de matériau rigide (11) ; moyens de connexion (13) de ladite couche de matériau rigide (11) à ladite couche de substrat flexible (12), par exemple avec de la colle, ledit élément multicouche flexible (10) étant **caractérisé par** le fait d'avoir été obtenu par un procédé (50) selon la revendication 1 qui précède.

4. Élément multicouche flexible (10) selon la revendication 3 qui précède, **caractérisé par le fait que** :
- l'épaisseur de chaque feuille ou plaque dudit matériau rigide (11) est comprise entre 1/10 mm et 10 mm, selon son utilisation prévue et les propriétés du substrat flexible (12) auquel il devra être convenablement collé ;
- le substrat flexible (12) a les mêmes dimensions que le matériau rigide (11) auquel il est ensuite collé ;
- le substrat flexible (12) a une surface homogène, de manière à permettre un collage approprié.

5. Élément multicouche flexible (10), selon une ou plusieurs des revendications 3 ou 4 qui précèdent, **caractérisé par le fait que** :
- ladite colle (13) à utiliser pour la connexion de ladite couche de matériau rigide (11) à ladite couche de matériau flexible (12) possède des caractéristiques physiques et chimiques lui permettant de maintenir, même après le séchage, une élasticité appropriée et une résistance à l'eau et aux changements de température, de manière à unir les deux couches définitivement.

6. Élément multicouche flexible (10), selon une ou plusieurs des revendications de 3 à 5 qui précèdent, **caractérisé par le fait que** :
- ladite texture (14), générée par un ordinateur avec des programmes de graphisme ou par des logiciels spécifiques, et qui peut être à son tour stockée sur support informatique (15), constitue un élément de guidage d'un dispositif laser (16) pendant l'incision et/ou la découpe de la couche de matériau rigide (11), préalablement collée sur le substrat flexible (12),
de telle sorte que le nouveau matériau (18a), (18b), (18c), obtenu par ledit traitement d'incision et/ou de découpe, n'ait plus une structure rigide, mais la partie supérieure fractionnée en plusieurs parties (19), tel que défini dans la structure des lignes qui composent la texture (14).

7. Élément multicouche flexible (10), selon une ou plusieurs des revendications de 3 à 6 qui précèdent, **caractérisé par le fait que** :
- ledit dispositif laser (16) est calibré de telle sorte que la puissance, la vitesse et le degré de définition puissent influer uniquement sur l'épaisseur du matériau rigide (11), en laissant intacte la couche de colle (13) et le substrat flexible sous-jacent (12).

8. Élément multicouche flexible (10), selon une ou plusieurs des revendications de 3 à 7 qui précèdent, **caractérisé par le fait que** :
- les parties (19) composant la texture (14) ont une dimension allant de 1 mm² à 10 mm², voire plus, en fonction des besoins et de l'effet que l'on souhaite produire.

9. Élément multicouche flexible (10), selon une ou plusieurs des revendications de 3 à 8 qui précèdent, **caractérisé par le fait que** :
- lesdites parties (19) peuvent être éliminées par la couche de matériau rigide (11),
de manière à augmenter la flexibilité et à permettre le pliage dudit nouveau matériau (18a), (18b), (18c) dans plusieurs directions et, par conséquent, à augmenter ses applications possibles.
